# EUROPEAN PATENT SPECIFICATION

(11) **EP 3 825 536 B1**
(45) Date of publication and mention of the grant of the patent: **05.07.2023**
(21) Application number: 19863421.4
(22) Date of filing: 26.08.2019
(51) Int. Cl.: F02D 45/00, F02P 5/15

(54) **ENGINE IGNITION DEVICE FOR VEHICLES**
MOTORZÜNDVORRICHTUNG FÜR FAHRZEUGE
DISPOSITIF D'ALLUMAGE DE MOTEUR POUR VÉHICULES

(30) Priority: 21.09.2018 JP 2018176900
(43) Date of publication of application: 26.05.2021
(73) Proprietor: HONDA MOTOR CO., LTD., Minato-ku Tokyo 107-8556 (JP)
(72) Inventor: OSAWA, Toshifumi, Wako-shi, Saitama 351-0193 (JP); AOKI, Erina, Wako-shi, Saitama 351-0193 (JP)
(74) Representative: Beder, Jens
(86) International application number: PCT/JP2019/033309
(87) International publication number: WO 2020/059436

(56) References cited:
- EP-A1- 1 321 667
- DE-U1-202005 020 147
- JP-A- 2000 234 555
- JP-A- 2004 176 594
- JP-A- 2005 307 855
- JP-A- 2006 274 998
- JP-A- 2012 002 204
- US-A1- 2010 212 633
- US-B2- 7 431 014
- US-B2- 8 656 882

## Description

### [Technical Field]

The present invention relates to an engine ignition device for vehicles suitable for vehicles equipped with a kick-start unit for kick-starting an engine, and more particularly, to an engine ignition device for vehicles which prevents a kick-back during the cranking sequence while kick-starting.

### [Background Art]

When kick-starting an engine, there are cases in which the rotation speed of a crankshaft lowers at near a top dead point of the engine and in which, when, in such a state, the engine is ignited, the crankshaft reverse-rotates. Such a phenomenon is generally called a "kick-back."

In patent literature 1, technology is disclosed in which, for an engine ignition control device which prohibits output of an ignition command when a time difference between a predetermined crank angle signal for outputting an ignition command to an engine ignition device and an immediately preceding crank angle signal is equal to or larger than a predetermined value, a threshold to be compared with the engine rotation speed immediately before an ignition command is outputted is set based on the engine rotation speed at near a bottom dead point where the engine rotation speed starts lowering.

According to the patent literature 1, whether or not a kick-back will occur can be determined based on a judgment accurately reflecting the degree of lowering of the engine rotation speed, so that whether or not a kick-back will occur can be determined with high accuracy. As a result, occurrence of a kick-back can be prevented more effectively.

### [Citation List]

### [Patent Literature]

[Patent literature 1] Publication of Japanese Patent No. 5148530

### [Summary of Invention]

### [Technical Problem]

According to the patent literature 1, a configuration is used in which ignition control is not performed when the crankshaft rotation speed at near a bottom dead point of the crankshaft is equal to or lower than a predetermined value. However, whether or not a kick-back will really occur cannot be known without measuring the crankshaft speed at near a compression top dead point.

US 8 656 882 B2 is another example of a kick-back prevention means, based on the detection of the engine speed at a predetermined crank angle position near a compression top dead point.

An object of the present invention is to solve the above technical problem and provide an engine ignition device for vehicles which prevents a kick-back based on the crankshaft speed at near a compression top dead point of an engine.

### Solution to Problem

To achieve the above object, the present invention provides an engine ignition device which includes a kick-start unit connected to a crankshaft of an engine, an ignition unit which ignites the engine, a crank angle detection unit which detects the angle of the crankshaft, a crank speed detection unit which detects the rotation speed of the crankshaft, and a control unit which controls the ignition unit based on results of detection by the crank angle detection unit and the crank speed detection unit, the device featuring a configuration as described below.
(1) The control unit is equipped with a kick-back prevention means which, when the rotation speed of the crankshaft at the stage corresponding to within 50 degrees before a top dead point is equal to or lower than a predetermined value, delays engine ignition timing.
   A starter-cum-generator of the engine is connected to the crankshaft, the starter cum generator is a three-phase motor, the crank angle detection unit divides one rotation of the three-phase motor into a plurality of stages based on combinations of current direction in U, V and W phases of the three-phase motor and detects crankshaft angles by stage, when the rotation speed of the crankshaft at the stage corresponding to within 50 degrees before at the stage corresponding to within 50 degrees before the top dead point is equal to or lower than the predetermined value, the kick-back prevention means delays engine ignition timing by a predetermined number of stages.
(2) One rotation of the engine is divided into 36 stages.
(3) The control unit delays the ignition timing of the engine, even when the rotation speed of the crankshaft at the stage corresponding to 50 degrees before the top dead point is greater than the predetermined value, but the rotation speed at each subsequent stage up to the top dead point is equal to or lower than the predetermined value.

### [Advantageous Effects of Invention]

According to the present invention, the following effects are achieved.
(1) In an engine ignition device which includes a kick-start unit connected to a crankshaft of an engine, an ignition unit which ignites the engine, a crank angle detection unit which detects an angle of the crankshaft, a crank speed detection unit which detects the rotation speed of the crankshaft, and a control unit which controls the ignition unit based on results of detection by the crank angle detection unit and the crank speed detection unit, the control unit is equipped with a kick-back prevention means which, when the rotation speed of the crankshaft at near a top dead point is equal to or lower than a predetermined value, delays engine ignition timing. Therefore, it becomes possible to adjust ignition timing according to the crankshaft rotation speed at near the top dead point of the engine and to effectively prevent a kick-back.
   A starter-cum-generator of the engine is connected to the crankshaft, the crank angle detection unit detects the rotational position of the starter-cum-generator, and the kick-back prevention means delays engine ignition timing when, based on the rotational position of the starter-cum-generator, the rotation speed of the crankshaft at near the top dead point is equal to or lower than a predetermined value. Therefore, without requiring a dedicated sensor for detecting the crankshaft angle to be separately provided, it becomes possible to recognize, just by monitoring the rotation angle of the starter-cum-generator, a state in which a kick-back can easily occur.
   The starter-cum-generator is a three-phase motor, the crank angle detection unit divides one rotation of the three-phase motor into plural stages based on combinations of current directions in U, V and W phases of the three-phase motor and detects crankshaft angles by stage numbers, and, when the rotation speed of the crankshaft at near the top dead point is equal to or lower than a predetermined value, the kick-back prevention means delays engine ignition timing by a predetermined number of stages. Therefore, without requiring a dedicated sensor for detecting the crankshaft angle to be separately provided, it becomes possible to recognize, just by monitoring changes in stages, a state in which a kick-back can easily occur.
(2) One rotation of the engine is divided into 36 stages. Therefore, without requiring a dedicated sensor for detecting the crankshaft angle to be separately provided, it becomes possible to delay ignition timing in units of 10 degrees.
(3) In such a way, even when, after occurrence of an engine speed greater then a predetermined value in the motor stage corresponding to 50 degrees before the top dead center, the engine rotation speed rapidly lowers and the momentary engine speed is smaller and/or equal to a predetermined value before ignition, it can be detected and the timing of ignition can be delayed. Therefore, even when the engine rotation speed rapidly lowers in front of the compression top dead point, a kick-back can be prevented.

### [Brief Description Of Drawings]

Fig. 1 is a side view of a two-wheeled vehicle according to an embodiment of the present invention.
Fig. 2 is a sectional side view of an engine.
Fig. 3 is a sectional view of the engine.
Fig. 4 is a schematic block diagram of an idling stopping control system of the engine.
Fig. 5 is a flowchart for idling stopping permission determination control.
Fig. 6 is a flowchart for idling stopping control.
Fig. 7 is a front view of a combination meter.
Fig. 8 is a function block diagram of a kick-back prevention unit (80B).
Fig. 9 is a diagram showing how stages are determined based on phase currents.
Fig. 10 is a diagram showing relationships between phase current combinations and stages.
Fig. 11 is a time chart of control for delaying ignition timing according to a momentary NE.
Fig. 12 is a flowchart of a procedure for delaying ignition timing according to a momentary NE.
Fig. 13 is a time chart of different control for delaying ignition timing according to a momentary NE.

### [Description of Embodiments]

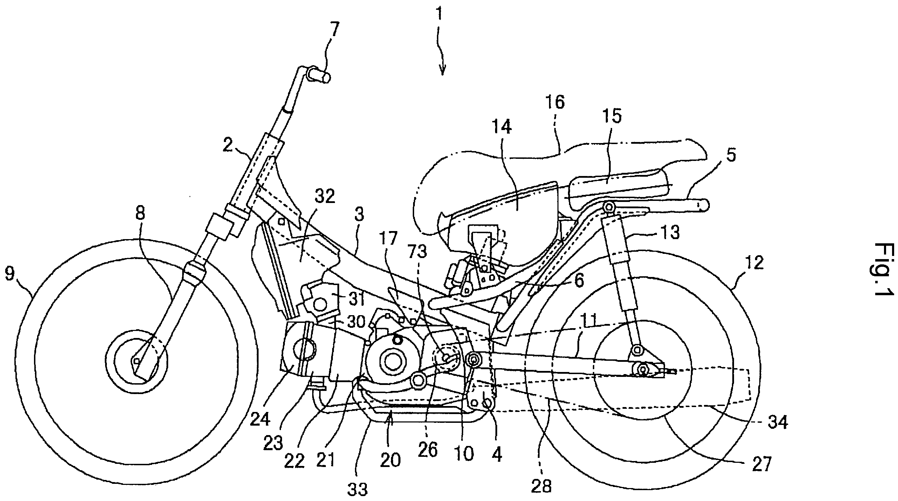

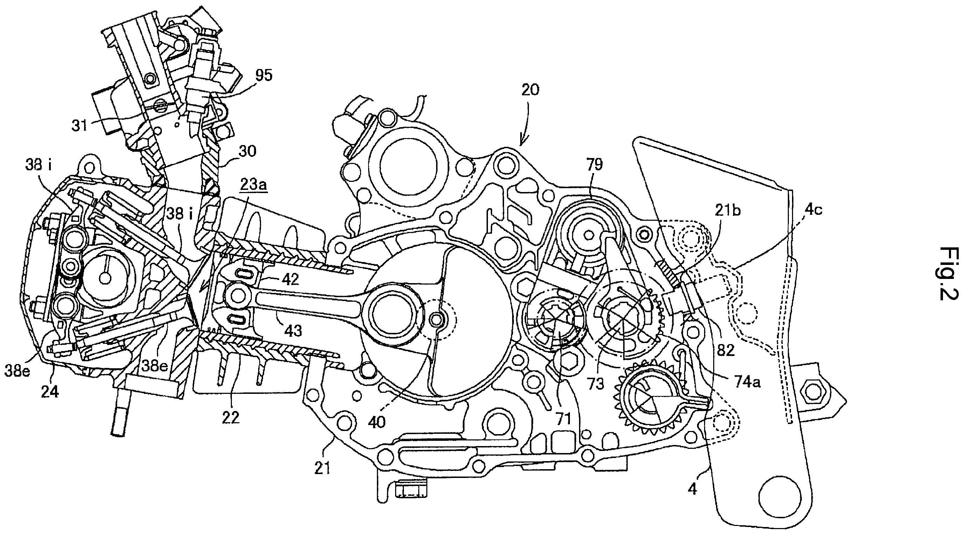

In the following, an embodiment of the present invention will be described in detail with reference to drawings. Fig 1 is a side view of a two-wheeled vehicle equipped with a kick-back prevention device according to an embodiment of the present invention, and Fig. 2 is a sectional view of an engine mounted on the two-wheeled vehicle.

A body frame includes a main frame 3 extending rearward and diagonally downward from a head pipe 2. In a rear end portion of the main frame 3, a pair of left and right pivot plates 4, 4 are vertically downwardly provided. A pair of left and right rear frames 5, 5 extend rearward and diagonally upward from a rear portion of the main frame 3. Sub-frames 6, 6 are provided between the main frame 3 and the rear frames 5, 5. The head pipe 2 is attached with a handlebar 7 such that a front fork 8 is freely steerable, and the front fork 8 rotatably supports at a lower end thereof a front wheel 9.

The pivot plate 4 is connected with a swing arm 11 which is vertically freely swingable with a front end thereof pivotally supported at a pivot shaft 10, and, at a rear end of the swing arm 11, a rear wheel 12 is rotatably supported. Between the swing arm 11 and the upward rear frame 5, a rear cushion 13 is interposed. A storage box 14 is provided in front of a pair of left and right rear frames 5, 5, a fuel tank 15 is supported between the storage box 14 and a rear portion of the rear frames 5, 5, and a seat 16 is freely openably/closably provided over the storage box 14 and the fuel tank 15.

An engine 20 is suspendedly mounted being supported by an engine hanger 17 downwardly projectingly provided in a portion rearward of a middle part of the main frame 3 and by a pivot plate 4. The engine 20 is a four-stroke cycle, one-cylinder, air-cooled engine and is provided with a centrifugal clutch 51.

The engine 20 is mounted on the body frame transversely with a crankshaft 40 oriented in the left-right direction such that the cylinder is positioned to extend approximately horizontally forward. Namely, a cylinder block 22, a cylinder head 23 and a cylinder head cover 24 are forwardly stacked in this order, protruding from a crankcase 21.

In a rear portion of the crankcase 21, a counter shaft 73 which is an output shaft protrudes leftward from a mission room, a drive sprocket 26 is fitted to an end portion of the counter shaft 73, and a drive chain 28 is wound between the drive sprocket 26 and a driven sprocket 27 fitted to the axle of the rear wheel 12 so as to transmit the power of the engine 20 to the rear wheel 12 (see Fig. 1).

From the upper surface of the cylinder head 23 approximately horizontally positioned forward, an intake pipe 30 extends upward, and the intake pipe 30 is connected, via a throttle body 31 integrally provided with a fuel injection valve 95, to an air cleaner 32 attached to the main frame 3. An exhaust pipe 33 extending downward from the lower surface of the cylinder head 23 is bent to then extend rearward, and is connected, at rearward of the crankcase 21, to a muffler 34 positioned on the right side of the vehicle body.

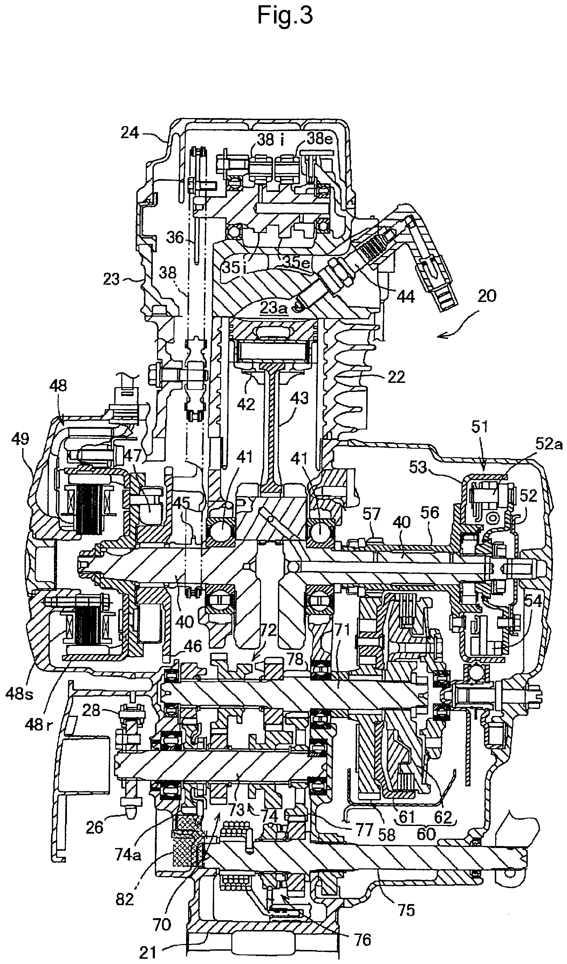

Referring to Fig. 3, in the engine 20, the crankshaft 40 is rotatably supported by the crankcase 21 via a pair of left and right main bearings 41, 41, and the reciprocating motion of a piston 42 slidably fitted in the cylinder bore of the cylinder block 22 is converted into rotational motion of the crankshaft 40 via a connecting rod 43. In a combustion chamber 23a formed between the top surface of the piston 42 and the ceiling surface of the cylinder head 23, an electrode is exposed at a tip of a spark plug 44 fitted into the ceiling wall of the cylinder head 23 is exposed.

In the left-side portion, extending leftward from the left main bearing 41, of the crankshaft 40, a drive sprocket 45, a driven gear 46, and an ACG starter motor 48 serving as a starter-cum-generator having functions of both a starter motor and a generator are provided in this order from the main bearing 41 leftward. Between the drive sprocket 45 integrally coupled with the crankshaft 40 and a cam sprocket 36 integrally fitted to a cam shaft 35 of a dynamic valve system rotatably supported by the cylinder head 23, a timing chain 38 is wound, and the cam shaft 35 is rotationally driven at 1/2 the rotation speed of the crankshaft 40 causing an intake rocker arm 38i and an exhaust rocker arm 38e which swing in contact with an intake cam 35i and an exhaust cam 35e of the cam shaft 35, respectively, to open and close an intake valve 39i and an exhaust valve 39e at predetermined timings, respectively, to thereby perform intake and exhaust operations of the engine 20.

The driven gear 46 rotatably supported, via a needle bearing, by the crankshaft 40 is connected, via a unidirectional clutch 47, to an outer rotor 48r of the ACG starter motor 48 integrally coupled to the crankshaft 40. An inner stator 48s of the ACG starter motor 48 is fixedly supported by a generator cover 49.

On the other hand, in the right-side portion, extending rightward from the right main bearing 41, of the crankshaft 40, a centrifugal clutch 51 for starting is provided at a right end, and, between the centrifugal clutch 51 and the main bearing 41, a cylindrical member 56 is rotatably supported.

The centrifugal clutch 51 includes a drive plate 52 which rotates integrally with the crankshaft 40 and a bowl-shaped clutch outer 53 which is positioned outside the drive plate 52 and which rotates integrally with the cylindrical member 56. Three support shafts 52a fixed to the drive plate 52 swingably support three clutch shoes 54 each including a centrifugal weight. Each clutch shoe 54 including a lining made of a friction material provided on an outer surface thereof is positioned such that the gravity center of the clutch shoe 54 is behind the position of the support shaft 52a in the rotational direction of the crankshaft 40. As the crank shaft 40 rotates, the clutch shoe 54 also rotates and is swung, by centrifugal force, outward in the radial direction resisting a clutch spring (not shown) and, when a predetermined rotation speed is exceeded, the clutch shoe 54 comes into contact with the clutch outer 53, causing the centrifugal clutch 51 to be connected by the friction force.

A drive gear 57 is formed at a left end of and integrally with the cylindrical member 56. Therefore, until the crankshaft 40 exceeds a predetermined rotation speed, the centrifugal clutch 51 is in a disconnected state and the rotation of the crankshaft 40 is not transmitted to the downstream cylindrical member 56 and beyond, but, when the predetermined rotation speed is exceeded, the centrifugal clutch 51 is connected and the rotation of the crankshaft 40 is transmitted to the cylindrical member 56 and the drive gear 57.

A driven gear 58 engaging with the drive gear 57 is rotatably supported by a main shaft 71 of a multi-stage transmission 70 of a constant engagement type, and the driven gear 58 is drivingly connected via a damper to a clutch outer 61 of a shifting clutch 60 provided at a right end part, protruding rightward from the crankcase 21, of the main shaft 71.

The shifting clutch 60 is a friction-type multi-plate clutch having multiple clutch plates which are frictionally joined or released using a release mechanism operated by a driver. When the multiple clutch plates are friction-joined by a spring force, the torque of the clutch outer 61 is transmitted to a clutch inner 62 integrally coupled with the main shaft 71 causing the shifting clutch 60 to enter a connected state. When the frictional joining of the multiple clutch plates is released, the torque transmission from the clutch outer 61 to the clutch inner 62 is cut off causing the shifting clutch 60 to enter a disconnected state.

The multi-stage transmission 70 positioned rearward of the crankshaft 40 in the crankcase 21 is a manual transmission and includes the main shaft 71 rotatably supporting a group of main gears 72 and the counter shaft 73 rotatably supporting a group of counter gears 74. When a shift drum 79 (see Fig. 2) is rotated by a shifting operation mechanism, a shift fork (not shown) engaged in the cam groove of the shift drum 79 appropriately moves a shifter gear on a support shaft in the left-right direction to engage an adjacent gear, thereby, selecting, corresponding to the shifting operation performed, engagement between a gear out of the main gear group 72 and a gear out of the counter gear group 74 so as to enable effective power transmission and carry out gear shifting. The counter shaft 73 is an output shaft, and a drive sprocket 26 is fitted to a left end of the counter shaft 73 extending leftward through the crankcase 21.

Near the counter shaft 73, a kick shaft 75 extending in parallel with the counter shaft 73 is rotatably supported by the crankcase 21. The rotation of the kick shaft 75 is transmitted via an idle gear 77 which is rotatably supported, via a dog clutch 76 of the kick shaft 75, by the counter shaft 73 to a gear 78 formed on the main shaft 71 and is further transmitted via the shifting clutch 60 to the crankshaft 40, thereby, allowing the engine 20 to be started by kick operation.

Referring to Figs. 2 and 3, a rear wall 21b of the crankcase 21 covering rearward of the counter gear group 74 is attached with a vehicle speed sensor 82 positioned rearward of a shifting driven gear 74a which, being positioned leftmost in the counter gear group 74, rotates integrally with the counter shaft 73. The vehicle speed sensor 82 is installed to protrude from the rear wall 21b with a detection part facing teeth of the shifting driven gear 74a.

Therefore, as shown in Fig. 2, a gusset 4c (broken-line part in Fig. 2) connecting the pair of left and right pivot plates 4, 4 has a concave portion formed not to contact the vehicle sensor 82 as well as the engine-mounted part and covers, like an eave, the vehicle sensor 82 from diagonally above and rear for protection.

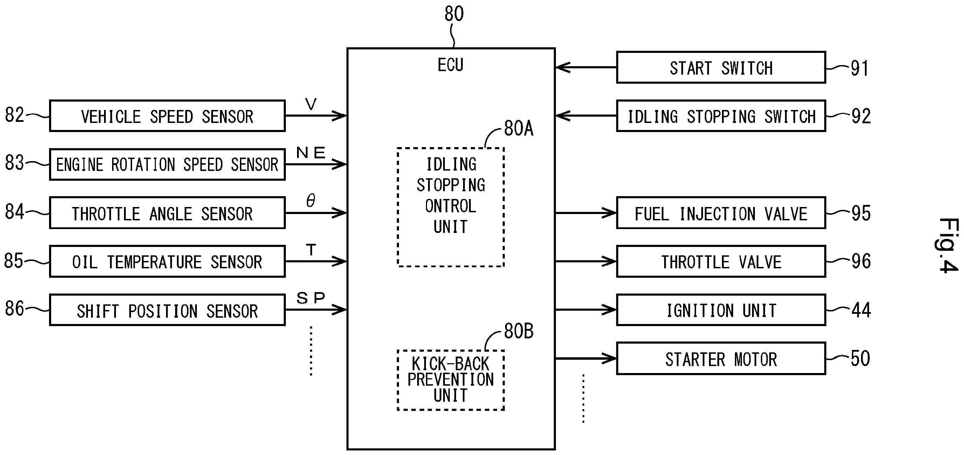

Fig. 4 is a block diagram for describing functions that the two-wheeled vehicle generally configured as described above has for idling stopping and kick-back prevention. The engine 20 is controlled by an ECU (engine control unit) 80. The ECU 80 includes an idling stopping control unit 80A and a kick-back prevention unit 80B.

The ECU 80 receives vehicle speed V detected by a vehicle speed sensor 82, engine rotation speed NE which is the rotation speed of the crankshaft 40 detected by an engine rotation speed sensor 83, throttle angle θ which is the degree of throttle valve opening detected by a throttle angle sensor 84, oil temperature T which is the lubricant oil temperature detected by an oil temperature sensor 85, shift position SP of the multi-stage transmission 70 detected by a shift position sensor 86 and other detected information indicating the operating state of the engine 20.

In addition, information on switches operated by a driver, such as a start switch 91 and an idling stopping switch 92, is also inputted to the ECU 80. The start switch 91 is operated to start the engine 20. The idling stopping switch 92 is kept on when the driver desires execution of idling stopping and is kept off when idling stopping is not necessary.

The ECU 80 drives and controls the fuel injection valve 95 provided integrally with the throttle body 31, a throttle valve 96 inside the throttle body 31, the spark plug 44 and the above-mentioned ACG starter motor 48 and other devices.

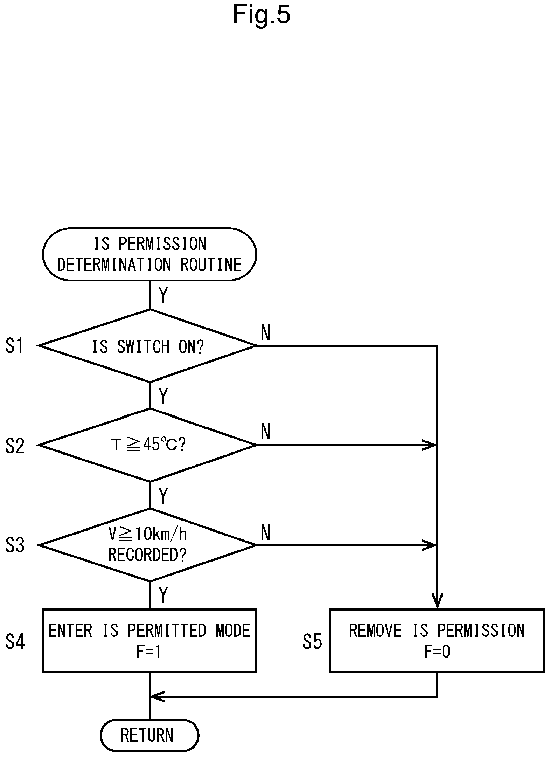

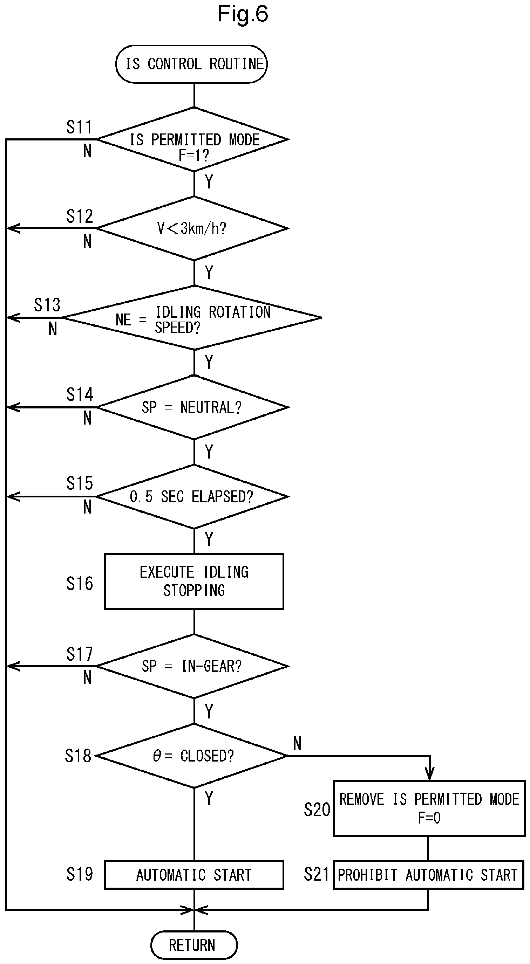

Next, idling stopping control performed by the idling stopping control unit 80A will be described with reference to flowcharts of Figs. 5 and 6.

In step S1 of the idling stopping (IS) permission determination routine shown in Fig. 5, whether or not the idling stopping permitted mode in which idling stopping is permitted has been entered is determined. In the present embodiment, whether or not idling stopping is permitted is determined based on the idling stopping switch 92. When the idling stopping switch 92 is in an off state, processing advances to step S5 where idling stopping permission is removed and an idling stopping permission flag F is set to "0". When the idling stopping switch 92 is in an on state, processing advances to step S2.

In step S2, whether or not the oil temperature T is 45 °C or higher is determined, and, when lower than 45 °C processing advances to step 5 where the idling stopping permission is removed and the idling stopping permission flag F is set to "0". When the oil temperature T is 45 °C or higher, processing advances to step S3.

In step S3, whether or not the vehicle speed V is 10 km/h or higher is determined, and, when lower than 10 km/h, processing advances to step S5 where the idling stopping permission is removed and the idling stopping permission flag F is set to "0". When the vehicle speed V is more than 10 km/h processing advances to step S4 where the idling stopping permitted mode is entered and the idling stopping permission flag F is set to "1".

In step S1, whether or not idling stopping is requested by the driver is determined, and, in steps S2 and S3, whether the two-wheeled vehicle is in a state of going to stop is determined. Namely, only when idling stopping is wished, the idling stopping switch 92 is on and the vehicle is in a state of going to stop, idling stopping is permitted and the idling stopping flag F is set to "1".

In step S11 of the idling stopping control routine shown in Fig. 6, whether the idling stopping permitted mode has been entered is determined based on the idling stopping permission flag F, and, when the idling stopping permission mode is in a removed state (F = 0), processing exits the present routine without executing idling stopping and returns to step S11 where the above processing is repeated. When the idling stopping permitted mode has been entered (F = 1), processing advances to step S12.

In step S12, whether or not the vehicle speed V is lower than 3 km/h (0 km/h included) is determined, and, when 3 km/h or higher, processing exits the present routine without executing idling stopping. When the vehicle speed V is lower than 3 km/h, processing advances to step S13 where whether or not the engine rotation speed NE is an idling rotation speed is determined. When not an idling rotation speed, processing exits the present routine without executing idling stopping, and, when the engine rotation speed NE is an idling rotation speed, processing advances to step S14.

In step S14, whether or not the shift position SP is neutral, that is, whether or not a gear change to neutral has been made is determined, and, when a gear change to neutral has not been made, processing exits the present routine without executing idling stopping. When a gear change to neutral has been made, processing advances to step S15 where whether 0.5 second has elapsed after the gear change to neutral is determined. Unless 0.5 second has elapsed, processing exits the present routine, and, when 0.5 second has elapsed, processing advances to step S16 where, for example, ignition of the spark plug 44 and fuel injection from the fuel injection valve 95 are prohibited and idling stopping is executed.

In the control performed in step S11 to step S16, when, on the condition that the idling stopping permitted mode has been entered, the vehicle speed V is lower than 3 km/h (0 km/h included) and the engine rotation speed NE is an idling rotation speed, the vehicle is assumed to have stopped or about to stop, and, in such a state, when a gear change to neutral is made, idling stopping is executed in only 0.5 second later.

According to the present embodiment, idling stop is started after a lapse of very short time which is only 0.5 seconds, in response to the driver's intentional operation of changing the shift position to a neutral position, without waiting for a predetermined time that would be taken to check continuation of signal. Thus, the idling time before the idling stop can be decreased as much as possible, and as a result, fuel consumption can be suppressed.

Idling is stopped 0.5 second after gears are changed to neutral in the multi-stage transmission, so that, compared with a case in which idling is instantly stopped when a gear change to neutral is made, the driver can enter an idling-stopped state with a more natural feeling without any discomfort.

Alternatively, since the discomfort felt by a driver when idling is instantly stopped upon a gear change to neutral is a very subtle feeling, idling may be stopped without waiting for 0.5 second after a gear change to neutral.

Idling stopping is started by a driver's intended gear change to neutral. Therefore, when it is desired to start the vehicle immediately after stopping, the driver need not make a gear change to neutral, so that a situation in which time is taken before restarting the engine after idling is unintentionally stopped can be avoided.

After idling stopping is executed in step S16, processing advances to step S17 where whether or not the shift gear position SP has been changed from neutral to an in-gear position is determined. When the neutral position has been kept without changing to an in-gear position, processing exits the present routine allowing the idling stopped state to stay.

When, in step S17, a gear change to an in-gear position is determined to have been made, processing advances to step S18 where whether or not the throttle angle θ indicates a closed state is determined. When the throttle angle θ indicates a closed state, processing advances to step S19 where the engine 20 is automatically started and the present routine is exited.

When idling stopping is started, the centrifugal clutch 51 is already disconnected. Therefore, even if, after idling stopping is made, the engine 20 is automatically started immediately after the shift position SP is changed from neutral to an in-gear position, the vehicle does not start. Thus, the engine can be automatically started without causing any problem in a simple configuration.

The driver starts idling stopping by an intended gear-change operation and causes the engine 20 to be automatically started also by an intended gear-change operation, so that idling stopping can be controlled based on the driver's intention.

When it is determined that a gear change to an in-gear position has been made (step S17) and, in step S18, that the throttle angle indicates, not a closed state, but an open state, processing advances to step S20 where the idling stopping permission flag F is set to "0" and the idling stopping permitted mode is removed. Processing further advances to step S21 where automatic starting of the engine 20 is prohibited and then exits the present routine.

Therefore, starting of the two-wheeled vehicle 1 after idling stopping is made can be prevented, and, by removing the idling stopping permitted state, the engine is put not in an idling stopped state but in a normally stopped state.

In a state with automatic starting of the engine 20 prohibited, the engine 20 is not in an idling stopped state but in a normally stopped state with the idling stopping permitted state removed, so that the engine 20 can be started by a starting operation using the start switch 91 or a kick pedal.

Differently from the above embodiment, in the idling stopping control routine, the determination to be made in step S13 as to whether or not the engine rotation speed NE is an idling rotation speed and the determination to be made in step S14 as to whether or not the shift position SP has been changed to neutral may be changed to determination as to whether or not the throttle angle indicates a closed state while omitting the determination of the shift position so as to exit the present routine when the throttle angle indicates an open state and so as to cause processing to advance to step S15 when the throttle angle indicates a closed state.

In this case, the determination of whether or not 0.5 second has elapsed to be made in step S15 may be changed to determination of whether or not 3 seconds have elapsed. Processing may be arranged such that, after elapsing of 3 seconds, idling stopping is executed regardless of the gear shift position and such that, in the idling stopped state, injection is stopped, headlights are dimmed, and an idling stopping indicator is lit.

Also, between step S13 and step S14 of the idling stopping control routine of the foregoing embodiment, determination of whether or not the throttle angle θ indicates a closed state may be added such that, when the throttle angle θ indicates an open state, the present routine is exited and such that, when the throttle angle θ indicates a closed state, processing advances to step S15.

Then, in the idling stopped state, when the throttle angle enters an open state, a starter relay is turned on causing the engine to start automatically, dimming of the headlights is stopped, and a standby indicator is turned off.

Also, a side stand switch may be provided and processing may be arranged such that, when the side stand is put in an upright position, idling stopping is executed and such that, when the side stand is toppled and enters a stored state, the engine is automatically started. Various idling stopping controls described above may be made selectable using a changeover switch.

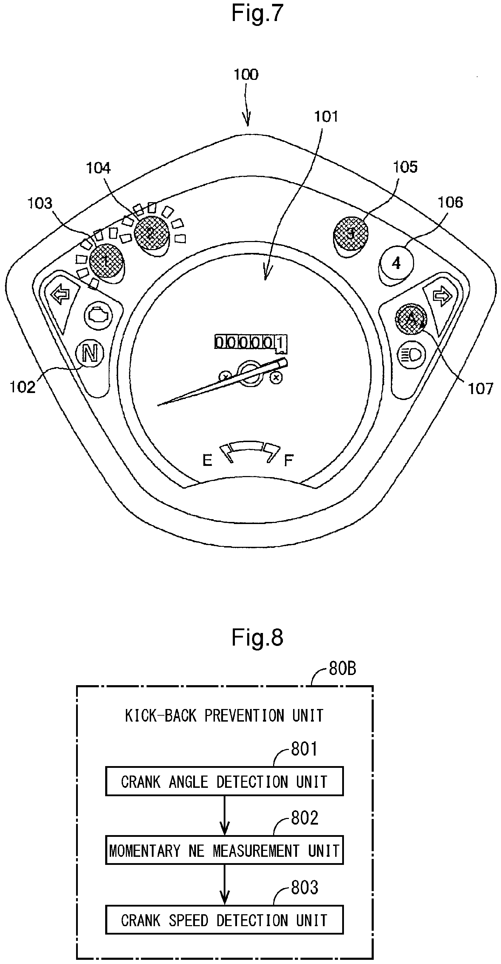

In Fig. 7, a combination meter 100 to be attached to a handle cover of a two-wheeled vehicle is shown.

The combination meter 100 includes an analog speedometer 101 occupying a large circular center portion around which various indicators are positioned. In a left half portion of the combination meter 100, a neutral indicator 102, a first speed range indicator 103, a second speed range indicator 104, etc. are positioned along the periphery of the analog speedometer 101, and, in a right half portion, a third speed range indicator 105, a fourth speed range indicator 106, an idling stopping permission indicator 107 to indicate on and off states of the idling stopping switch, etc. are positioned along the periphery of the analog speedometer 101.

In the case of idling stopping control in which idling stopping can be executed regardless of the gear shift position, when idling stopping is executed in a state in which, with the idling stopping switch on, the idling stopping permission indicator 107 and, with the multi-stage transmission set to the third (or fourth) speed range, the third speed range indicator 105 are lit on the combination meter 100 shown in Fig. 7, the first speed range indicator 103 and the second speed range indicator 104 start flashing.

As executing idling stopping with the multi-stage transmission set to the third (or fourth) speed range is not appropriate, flashing the first speed range indicator 103 and the second speed range indicator 104 is to alert the driver so as to cause the driver to down-shift to the first or second speed range where securing a starting torque is easy.

Fig. 8 is a function block diagram showing a configuration of the kick-back prevention unit 80B configured principally with a motor stage determination unit 801, a momentary NE measurement unit 802 and an ignition control unit 803.

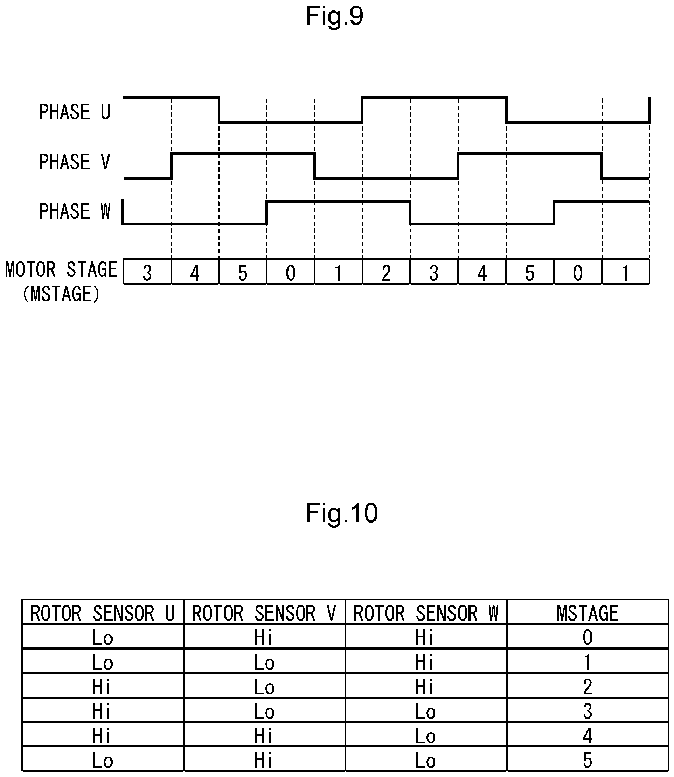

The motor stage determination unit 801 determines, based on the direction of current flowing in each phase of the ACG starter motor 48, angle ranges of the ACG starter motor 48 as motor stages (MSTAGE). In the present embodiment, a three-phase AC motor is used as the ACG starter motor 48, and, as shown in Figs. 9 and 10, the motor stage is determined as one of the oth to fifth stages based on the combination of directions of the currents flowing in phases U, V, and W.

In the present embodiment, as rotor sensors for detecting permanent magnets mounted on the inner rotor of the ACG starter motor 48, for example, plural hall elements are provided, and the direction of current flowing in each phase is detected as a hall element output signal. When, for example, phase U is low level and phase V and phase W are both high level, the motor stage is determined as "0". Similarly, when, for example, phase U is high level and phase V and phase W are both low level, the motor stage is determined as "3".

The momentary NE measurement unit 802 measures a momentary NE of the crankshaft 40 in each stage. In the present embodiment, the motor stage switches every 10 degrees, and a momentary NE during every 10 degrees is measured. When, at a crank angle corresponding to a vicinity of the top dead point of the engine, the momentary NE is equal to or lower than a reference NE (NEref), the ignition control unit 803 delays the timing of engine ignition.

The reference NE (NEref) for the vehicle according to the present embodiment is a threshold for determining whether or not the compression top dead point of the crank angle can be exceeded at the time of kick-starting and is set to, for example, 100 rpm. The reference NE (NEref) may be appropriately set based on the engine type and displacement volume and the like. For example, NEref may be set to 200 rpm for a vehicle mounted with a large V-type engine or to 250 rpm for a vehicle mounted with a large L-type engine.

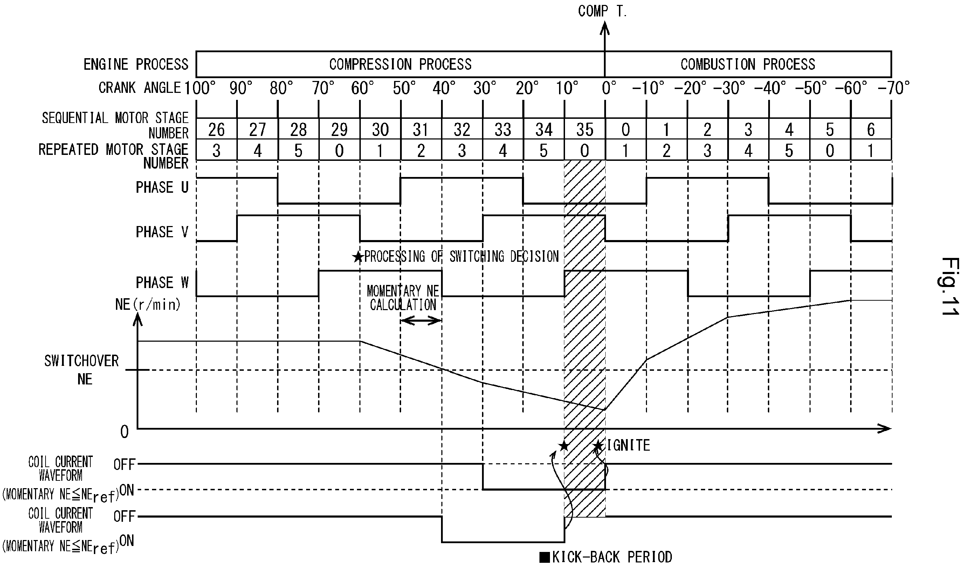

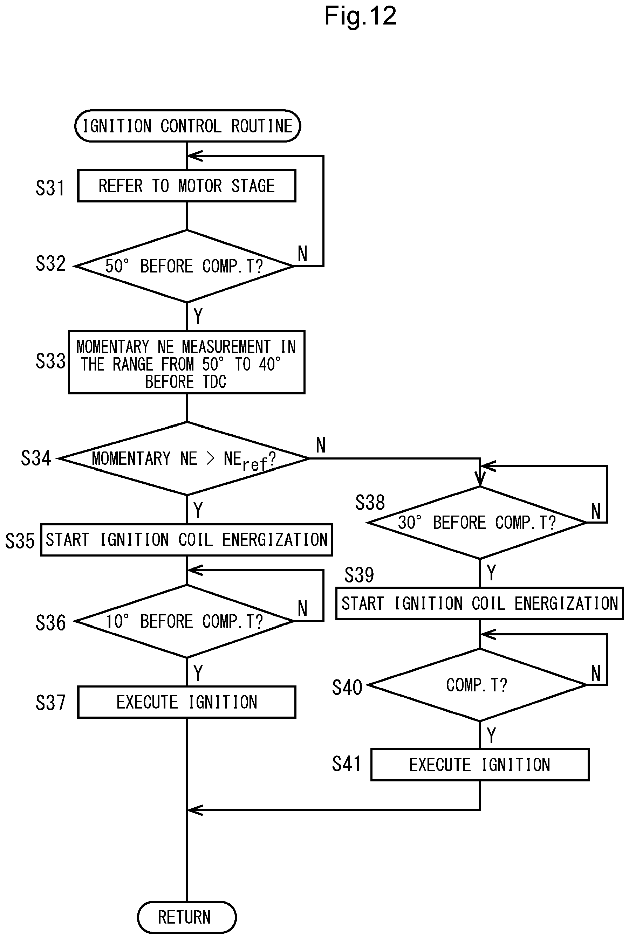

Fig. 11 is a time chart of control for delaying ignition timing according to the momentary NE, and Fig. 12 is a flowchart showing the control procedure.

In step S31, reference is made to the motor stage of the ACG starter motor 48. In step S32, whether or not the crankshaft 40 is in an angle position corresponding to 50 degrees before the compression dead point (COMP.T) of the engine is determined based on the motor stage. According to the present embodiment, the starting timing of the 31st motor stage corresponds to an angle position 50 degrees before COMP.T, so that, when the current timing is for starting the 31st motor stage, the angle position is determined as 50 degrees before COMP.T and processing advances to step S33.

In step S33, a momentary NE is measured in an angle range between 50 degrees before and 40 degrees before the compression top dead point. According to the present embodiment, the 31st motor stage corresponds to the angle range, so that a momentary NE of the 31st motor stage is measured.

In step S34, the momentary engine rotation speed and NEref, a threshold for determination, are compared, and, when momentary NE > NEref, kicking back is determined unlikely to occur and processing advances to step S35 where ignition coil energization is started. In step S36, whether or not the angle position is 10 degrees before the compression dead point is determined based on the motor stage.

According to the present embodiment, the 35th motor stage corresponds to the angle range between 10 degrees before and 0 degree before the compression top dead point, so that, when the current timing is for starting the 35th motor stage, the angle position is determined as 10 degrees before the compression dead point and processing advances to S37. In step S37, the engine is ignited by shutting off the power to the above coil.

On the other hand, when, in step S34, it is determined that momentary NE ≤ NEref, processing advances to step S38 where whether or not the angle position is 30 degrees before the compression top dead point is determined based on the motor stage. According to the present embodiment, the timing for starting the 33rd motor stage corresponds to an angle position 30 degrees before the compression top dead point. Therefore, when the current timing is for starting the 33rd motor stage, the angle position is determined as 30 degrees before the compression top dead point and processing advances to step S39 where energization of the ignition coil is started.

In step S40, whether or not the angle position corresponds to the compression top dead point is determined based on the motor stage. According to the present embodiment, the timing for starting the oth motor stage corresponds to the angle position corresponding to the compression top dead point. Therefore, when the current timing is for starting the oth motor stage, processing advances to step S41. In step S41, the engine is ignited by shutting off the power to the above coil.

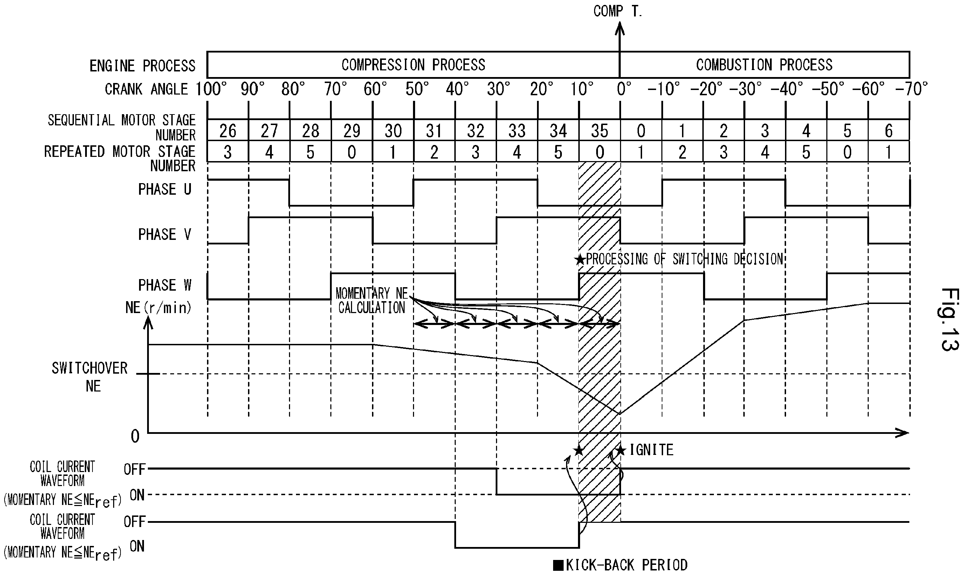

For the present embodiment, the determination of whether or not to delay the timing of ignition has been described as made based only on the momentary NE of the 31st motor stage, but the present invention is not limited to that way. As shown in Fig. 13, momentary NE measurement and comparison with NEref may be repeated in stages following the 31st motor stage.

In such a way, even when, after occurrence of momentary NE > NEref in the 31st motor stage, the engine rotation speed rapidly lowers and momentary NE ≤ NEref occurs before ignition, it can be detected and the timing of ignition can be delayed. Therefore, even when the engine rotation speed rapidly lowers in front of the compression top dead point, a kick-back can be prevented.

### [List Of Reference Signs]

1 ... Motorcycle, 2 ... Head pipe, 3 ... Mainframe, 4 ... Pivot plate, 5 ... Rear frame, 8 ... Front fork, 20 ... Engine, 40 ... Crankshaft, 41 ... Main bearing, 42 ... Piston, 48 ... ACG starter motor, 51 ... Centrifugal clutch, 80 ... ECU, 80A ... Idling stopping control unit, 80b ... Kick-back prevention unit, 82 ... Vehicle speed sensor, 83 ... Engine rotation speed sensor, 84 ... Throttle angle sensor, 85 ... Oil temperature sensor, 86 ... Shift position sensor, 91 ... Start switch, 92 ... Idling stopping switch, 95 ... Fuel injection valve, 96 ... Throttle valve

## Claims

1. An engine ignition device for vehicles, comprising:
a kick-start unit (75) connected to a crankshaft (40) of an engine (20);
an ignition unit (44) which ignites the engine (20);
a crank angle detection unit (801) which detects an angle of the crankshaft (40);
a crank speed detection unit (83) which detects a rotation speed of the crankshaft (40); and
a control unit (80) which controls the ignition unit (44) based on results of detection by the crank angle detection unit (801) and the crank speed detection unit (83), wherein
the control unit (80) is equipped with a kick-back prevention means (80B) which, when the rotation speed of the crankshaft (40) at a stage corresponding to within 50 degrees before a top dead point is equal to or lower than a predetermined value, delays engine ignition timing, and
a starter-cum-generator (48) of the engine (20) is connected to the crankshaft (40), and
the starter-cum-generator (48) is a three-phase motor, **characterized in that**,
the crank angle detection unit (801) divides one rotation of the three-phase motor into 36 stages based on combinations of current directions in U, V and W phases of the three-phase motor and detects crankshaft angles by stage, and
wherein, when the rotation speed of the crankshaft (40) at the stage corresponding to within 50 degrees before the top dead point is equal to or lower than the predetermined value, the kick-back prevention means (80B) delays engine ignition timing by a predetermined number of stages.

2. The engine ignition device for vehicles according to claim 1,
wherein the control unit (80) delays the ignition timing of the engine (20) even when the rotation speed of the crankshaft (40) at the stage corresponding to 50 degrees before the top dead point is greater than the predetermined value, but the rotational speed at each subsequent stage up to the top dead point is equal to or lower than the predetermined value.

## Patentansprüche

1. Eine Motorzündvorrichtung für Fahrzeuge, aufweisend:
eine Kickstartereinheit (75), die mit einer Kurbelwelle (40) eines Motors (20) verbunden ist;
eine Zündeinheit (44), die den Motor (20) zündet;
eine Kurbelwinkel-Erfassungseinheit (801), die einen Winkel der Kurbelwelle (40) erfasst;
eine Kurbelwellengeschwindigkeits-Erfassungseinheit (83), die eine Drehgeschwindigkeit der Kurbelwelle (40) erfasst; und
eine Steuereinheit (80), die auf Grundlage der Erfassungsergebnisse der Kurbelwinkel-Erfassungseinheit (801) und der Kurbelgeschwindigkeits-Erfassungseinheit (83) die Zündeinheit (44) steuert, wobei
die Steuereinheit (80) mit einer Rückschlagverhinderungs-Einrichtung (80B) ausgestattet ist, die, wenn die Drehzahl der Kurbelwelle (40) in einer Phase, in der diese innerhalb von 50 Grad vor einem oberen Totpunkt liegt, gleich oder niedriger als ein vorbestimmter Wert ist, den Motorzündzeitpunkt verzögert; und
einen Anlasser mit Lichtmaschine (48) des Motors (20) der mit der Kurbelwelle (40) verbunden ist, wobei
der Anlasser mit Lichtmaschine (48) einen Drehstrommotor darstellt, **dadurch gekennzeichnet, dass**,
die Kurbelwinkel-Erfassungseinheit (801) auf Grundlage von Kombinationen von Stromrichtungen in U-, V- und W-Phasen des Drehstrommotors eine Umdrehung des Drehstrommotors in 36 Stufen unterteilt und in der jeweiligen Stufe den jeweiligen Kurbelwellenwinkel erfasst, und
wobei, wenn die Drehgeschwindigkeit der Kurbelwelle (40) in der Stufe, die innerhalb von 50 Grad vor dem oberen Totpunkt liegt, gleich oder niedriger als der vorbestimmte Wert ist, die Rückschlagverhinderungs-Einrichtung (80B) den Motorzündzeitpunkt um eine vorbestimmte Anzahl von Stufen verzögert.

2. Die Motorzündvorrichtung für Fahrzeuge nach Anspruch 1,
wobei die Steuereinheit (80) den Zündzeitpunkt des Motors (20) auch dann verzögert, wenn die Drehzahl der Kurbelwelle (40) der 50 Grad vor dem oberen Totpunkt entsprechenden Stufe größer als der vorbestimmte Wert ist, die Drehzahl jeder nachfolgenden Stufe bis zum oberen Totpunkt aber gleich oder kleiner als der vorbestimmte Wert ist.

## Revendications

1. Dispositif d'allumage de moteur pour véhicules, comprenant :
une unité de démarrage au kick (75) reliée à un vilebrequin (40) d'un moteur (20) ;
une unité d'allumage (44) qui allume le moteur (20) ;
une unité de détection d'angle de vilebrequin (801) qui détecte un angle du vilebrequin (40) ;
une unité de détection de vitesse de vilebrequin (83) qui détecte une vitesse de rotation du vilebrequin (40) ; et
une unité de commande (80) qui commande l'unité d'allumage (44) sur la base de résultats de détection par l'unité de détection d'angle de vilebrequin (801) et l'unité de détection de vitesse de vilebrequin (83), dans lequel
l'unité de commande (80) est équipée d'un moyen de prévention de recul de kick (80B) qui, lorsque la vitesse de rotation du vilebrequin (40) à un étage correspondant à l'intérieur des 50 degrés avant un point mort haut est inférieure ou égale à une valeur prédéterminée, retarde le moment d'allumage de moteur, et
un générateur-avec-démarreur (48) du moteur (20) est relié au vilebrequin (40), et
le générateur-avec-démarreur (48) est un moteur triphasé, **caractérisé en ce que**,
l'unité de détection d'angle de vilebrequin (801) divise une rotation du moteur triphasé en 36 étages sur la base de combinaisons de directions de courant dans les phases U, V et W du moteur triphasé et détecte des angles de vilebrequin par étage, et
dans lequel, lorsque la vitesse de rotation du vilebrequin (40) à l'étage correspondant à l'intérieur des 50 degrés avant que le point mort haut soit inférieur ou égal à la valeur prédéterminée, le moyen de prévention de recul de kick (80B) retarde le moment d'allumage de moteur d'un nombre prédéterminé d'étages.

2. Dispositif d'allumage de moteur pour véhicules selon la revendication 1,
dans lequel l'unité de commande (80) retarde le moment d'allumage du moteur (20) même lorsque la vitesse de rotation du vilebrequin (40) à l'étage correspondant à l'intérieur des 50 degrés avant que le point mort haut soit supérieur à la valeur prédéterminée, mais que la vitesse de rotation à chaque étage suivant jusqu'au point mort haut soit inférieure ou égale à la valeur prédéterminée.
